Europäisches Patentamt

European Patent Office

Office européen des brevets

(11) Numéro de publication: **0 237 432**
**A1**

(12) **DEMANDE DE BREVET EUROPEEN**

(21) Numéro de dépôt: 87400524.2

(22) Date de dépôt: 10.03.87

(51) Int. Cl.⁴: **C 02 F 1/24**
C 02 F 1/58

(30) Priorité: 12.03.86 FR 8603522

(43) Date de publication de la demande:
16.09.87 Bulletin 87/38

(84) Etats contractants désignés:
AT BE DE ES GB IT NL

(71) Demandeur: **CENTRE DE PYROLYSE DU CHARBON DE MARIENAU ( C.P.M.)**
**Usine de Marienau**
**F-57600 Forbach (FR)**

(72) Inventeur: **Bernard, André**
**18, rue d'Alger**
**F-57600 Forbach (FR)**

**Daniel, Jean-Louis**
**Chemin de la Procession Aumont**
**F-60300 Senlis (FR)**

**Virgilio, Ange**
**18 rue Sorriaux**
**F-62460 Billy Montigny (FR)**

(74) Mandataire: **Santarelli, Marc**
**Cabinet Rinuy et Santarelli 14, avenue de la Grande Armée**
**F-75017 Paris (FR)**

(54) Procédé de traitement des eaux résiduaires ammoniacales.

(57) Ce procédé de traitement des eaux résiduaires ammoniacales se caractérise par le fait qu'il comprend une étape de flottation (4) assurant l'élimination des matières en suspension (MES) et l'extraction d'une partie de l'ammoniac libre.

Cette flottation est assurée par insufflation d'air ou de gaz industriel.

L'élimination des MES est améliorée par additif de réactif cationique (5,6) ou par recyclage.

L'extraction de l'ammoniac (V) est augmentée par injection de vapeur d'eau (VE) ou de gaz industriel.

Ce procédé est particulièrement bien adapté pour le traitement des eaux de cokeries.

**Description**

## Procédé de traitement des eaux résiduaires ammoniacales

La présente invention concerne un procédé de traitement des eaux résiduaires ammoniacales, en provenance des cokeries, des industries de distillation de la houille et des lignites, etc.

Dans ces eaux résiduaires, l'ammoniac existe sous deux formes :
- volatil ($NH_3$),
- fixe ($NH_4Cl$).

L'ammoniac est responsable des phénomènes d'eutrophisation des lacs et des cours d'eau résultant d'un enrichissement des eaux en substances nutritives. Plus grave encore, sa présence dans l'eau d'alimentation entraîne également des répercussions sur la santé, en particulier, une affection des nourrissons pouvant être mortelle : la méthémo-globinémie infantile.

Les réglementations officielles tendent donc à imposer une élimination de plus en plus poussée de l'ammoniac contenu dans les effluents rejetés dans le milieu naturel.

Ainsi, dans la région Lorraine, il est demandé de rejeter moins de 100 mg/l d'ammoniac total.

De plus, ces réglementations générales fixent également un taux maximal admissible en matières en suspensions (MES) :
(MES) : inférieure à 30 mg/l.

Ces réglementations imposent aux industries concernées l'utilisation de nouvelles techniques plus performantes, tout en restant économiquement supportable.

Le schéma classique de traitement des eaux ammoniacales est le suivant :
- prétraitement des eaux brutes pour éliminer les matières en suspension,
- strippage en milieu basique pour extraire l'ammoniac total,
- traitement final (exemple : traitement biologique en particulier le lagunage aéré) pour enlever la pollution organique.

La mise en oeuvre des deux dernières étapes impose un prétraitement efficace des eaux brutes.

En effet, la concentration élevée en MES et la nature des produits constituant ces MES : huiles, goudrons, poussières de coke ..., entraînent des problèmes d'encrassement, voire de colmatage et de corrosion des colonnes de distillation. Ainsi, préalablement à l'extraction de l'ammoniac, une élimination des MES s'avère indispensable.

Ce domaine du prétraitement des eaux ammoniacales et en particulier des eaux de cokeries, a fait l'objet de nombreuses études et différentes technologies ont été industrialisées. On peut citer le déshuilage et la décantation suivie d'une filtration sur un milieu (graviers, sable...), déterminé en fonction de la taille des particules à arrêter. L'inconvénient majeur de cette technique provient du colmatage fréquent du filtre, nécessitant un surdimensionnement des appareils et posant des problèmes d'exploitation de l'installation.

Des ajouts d'additifs favorisant la floculation des particules peuvent, dans une certaine mesure, améliorer ces opérations, mais ils entraînent, en contrepartie, une augmentation importante des frais d'exploitation.

Les techniques, jusqu'alors utilisées, s'étant révélées, notamment pour les goudrons émulsionnés qui ne sont pas arrêtés, partiellement efficaces et onéreuses au niveau des frais d'exploitation, la présente invention se propose donc de fournir un procédé garantissant un prétraitement simple, efficace et économique, et assurant à la fois, une extraction partielle de l'ammoniac libre.

Le procédé de la présente invention utilise la technique de la flottation.

Cette technique étant assimilable à une décantation inversée, on agit sur la densité apparente des matières en suspension de sorte que celles-ci aient un mouvement ascensionnel. La densité réelle de ces matières insolubles est modifiée par la fixation de bulles gazeuses qui font remonter le corps vers la surface où est effectué un écrémage.

Ainsi la vitesse limite ascensionnelle des particules est 20 fois plus élevée qu'en décantation.

Les eaux résiduaires de cokerie sont un produit fatal de la cokéfaction. Elles proviennent de la condensation, au barillet et dans les condenseurs primaires, de la vapeur d'eau contenue dans le gaz de distillation. Cette vapeur a pour origine l'eau présente au départ dans le charbon : l'humidité libre, l'humidité inhérente, l'eau de constitution, et l'eau formée au cours de la cokéfaction : l'eau de carbonisation.

Ces eaux résiduaires contiennent une partie des impuretés qui se sont formées dans les fours à coke à haute température par combinaison de certains constituants du charbon. Elles contiennent notamment des pollutants tels $H_2S$, HCN, les sulfocyanures, des phénols, $NH_3$ et des sels d'ammonium, des goudrons.

Elles représentent en poids 10 à 15 % du tonnage de charbon enfourné.

Etant donné la complexité des mélanges à traiter, il est surprenant que cette technique de flottation, issue de la métallurgie et principalement utilisée pour améliorer le rendement des séparateurs à huiles et des dégraisseurs, s'avère aussi efficace pour l'élimination des MES.

L'autre intérêt de cette flottation réside dans la constatation qu'elle assure également une extraction partielle de l'ammoniac libre. Selon une caractéristique essentielle de l'invention, le procédé de prétraitement comprend une étape de flottation assurant à la fois l'élimination des matières en suspension et l'extraction d'une partie de l'ammoniac libre.

Selon une caractéristique particulière, la flottation est assurée par insufflation d'air.

Selon une autre caractéristique particulière, la flottation est assurée par insufflation d'un gaz industriel.

La quantité d'air ou de gaz industriel doit être comprise entre 2 et 4 fois le volume d'eau à traiter.

Selon une autre caractéristique particulière, la flottation est améliorée par addition d'un réactif désémulsifiant notamment à une concentration comprise entre 10 et 30 mg/l.

Selon une autre caractéristique particulière, le pH est compris entre 7 et 9.

Selon une autre caractéristique particulière, l'opération de flottation est améliorée par double passe en soumettant l'eau déjà traitée à une seconde opération de flottation, ce qui permet d'éviter l'utilisation de réactif.

Selon une caractéristique particulière, de la vapeur d'eau est injectée dans la cellule de flottation.

Selon une autre caractéristique particulière, un gaz industriel est injecté dans la cellule de flottation.

Le rapport vapeur ou gaz industriel/eau à traiter optimum est compris entre 8 et 12 %. Cette injection de vapeur d'eau ou de gaz industriel augmente le taux d'extraction de l'ammoniac libre.

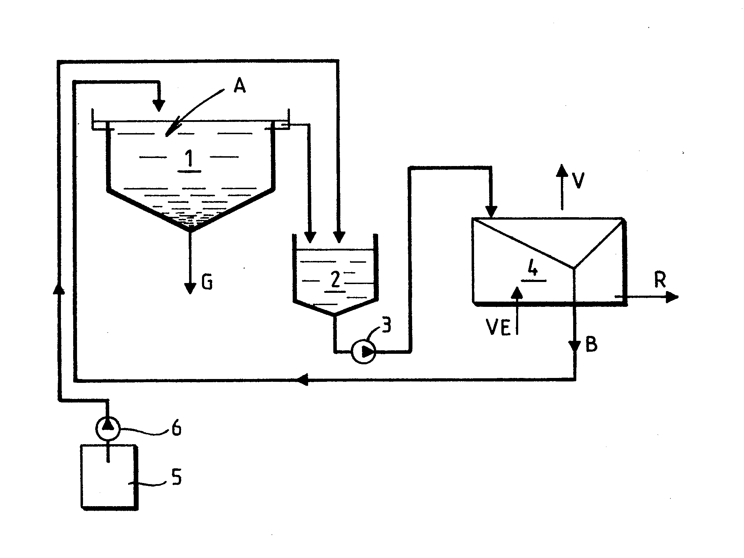

D'autres caractéristiques et avantages de l'invention ressortiront plus clairement de la description qui va suivre, faite en regard de la figure annexée, illustrant de façon schématique, une installation mettant en oeuvre le procédé de l'invention.

L'arrivée des eaux ammoniacales (A) chargées en MES se fait dans un décanteur (1) assurant la décantation des matières lourdes, en particulier les goudrons (G) ; l'eau surnageante est stockée dans un bac tampon (2) d'où elle est reprise par une pompe (3) alimentant à débit constant une cellule de flottation (4), cette cellule étant du type classique, utilisée en métallurgie.

La flottation est réalisée par insufflation d'air sous forme de bulles dont le diamètre est compris entre 0,5 à 1 mm.

L'air est aspiré par un groupe rotor-stator immergé dans l'eau à traiter.

Le rotor force le liquide à travers les ouvertures du stator, créant ainsi une dépression qui aspire l'air à l'intérieur du mécanisme. La zone comprise entre le stator et le rotor est une région de cisaillement intensif où les bulles d'air se trouvent finement dispersées.

La cavitation produite par le rotor, les zones de compression et de décompression entre rotor et stator favorisent la dispersion de l'air au sein du liquide.

L'arbre vertical tourne dans un tube coaxial sur lequel est fixé un robinet qui sert d'admission de l'air.

Avantageusement, on pourra remplacer l'air par un gaz industriel en particulier du gaz de cokeries, cette opération améliorant l'épuration des gaz.

L'évacuation des matières flottantes s'effectue en déversement libre par raclage de surface.

Les boues de flottation (B), très riches en goudrons sont recyclées vers le décanteur (1) d'où elles seront extraites avec les autres goudrons (G).

Selon une variante possible, un réactif désémulsifiant peut être ajouté, son rôle étant de rendre hydrophobe la surface des gouttelettes d'huile et de goudron et de faciliter ainsi leur adhérence aux bulles d'air. Le réactif est préparé de manière classique dans un bac (5) et injecté à l'aide d'une pompe doseuse (6) dans le bac tampon (2).

Durant cette opération de flottation, une partie de l'ammoniac libre se dégage sous forme de vapeurs (V) condensables. Cette extraction peut être améliorée par injection de vapeur d'eau (VE) ou d'un gaz industriel en particulier du gaz de cokeries. Après ce prétraitement, le rejet (R) de la cellule de flottation subit ensuite un strippage en milieu basique puis un traitement biologique.

Des essais en laboratoire et sur pilote industriel sur des eaux ammoniacales provenant d'une cokerie contenant entre 100 et 500 mg/l de MES et dont la température varie entre 20 et 60°C, sont présentés ci-après, à titre d'exemple.

### 1. Essais en laboratoire

Matériel utilisé

Les essais en laboratoire ont été menés sur une cellule de laboratoire pour étudier l'influence des différents paramètres de fonctionnement et préciser la nature et la concentration des réactifs.

Caractéristiques de la cellule

Capacité utile de la cuve : 5 litres
Vitesse d'agitation : 1950 tours/minute
Diamètre des bulles d'air : 0,5 à 1 nm

Résultats

a) temps de séjour

Le temps de séjour influe directement sur le taux d'élimination des MES.

Sans réactif, l'abaissement des MES est voisin de 80 % pour un temps de séjour de 10 minutes.

Avec addition de réactif, l'abaissement des MES se stabilise à partir de 3 minutes.

b) volume d'air injecté

Pour réaliser une élimination intéressante, le rapport volume d'air/volume d'eau, doit être au moins de 2 (élimination de 75 % avec addition d'un réactif), le rapport optimum étant de 4 (élimination de 95 % avec addition d'un réactif).

c) pH

Le rendement chute avec l'augmentation du pH. Le pH optimum est compris entre 7 et 9.

d) Nature du réactif désémulsifiant

L'efficacité des réactifs est d'autant plus élevée que leur charge sera forte. Parmi les réactifs du commerce qui ont été testés, le Demandeur a constaté que :
- ceux qui présentaient un caractère cationique fort conduisaient à un rendement d'élimination de l'ordre de 86 % ;
- ceux qui présentaient un caractère cationique moyen conduisaient à un rendement d'élimination de l'ordre de 83 % ;
- ceux qui présentaient un caractère cationique faible conduisaient à un rendement d'élimination de l'ordre de 80 % .

Les réactifs conditionnés sous la forme d'émulsions sont plus faciles à mettre en oeuvre que les poudres, par suite d'une dissolution plus aisée et d'une meilleure dispersion.

e) Taux d'incorporation du réactif

Le taux d'incorporation du réactif dans les eaux étant augmenté, le taux d'extraction des MES passe par un maximum pour une concentration de 25 parties par million (ppm). En effet, au-delà d'une certaine concentration en réactif, la viscosité des eaux est telle que la flottation des goudrons a du mal à se faire (problème de collage, colmatage, d'homogénéisation, mauvaise adhérence des gouttelettes de goudron aux bulles d'air), la fourchette économique optimum se situant entre 10 et 25 ppm.

f) élimination de l'ammoniac libre

La méthode de prétraitement exposée conduit également à une extraction partielle de l'ammoniac libre par suite du brassage intensif, résultant de la flottation. Une augmentation de la quantité d'ammoniac libérée peut être obtenue par une injection de vapeur d'eau (VE) surchauffée. La vapeur d'eau (VE) produite par un générateur à une pression de 4 bars et une température de 225°C est injectée dans la cellule de flottation ; en pratique, elle peut provenir du réseau vapeur de la cokerie.

L'extraction de l'ammoniac libre croît avec le débit de vapeur jusqu'à un maximum correspondant à une élimination de 35 % pour un rapport vapeur/eau à traiter, voisin de 10 % .

Si le débit de vapeur d'eau est plus important, l'enlèvement des MES est perturbé.

2) Essais sur pilote

L'objectif de ces essais a été de confirmer en grandeur semi-industrielle les résultats des essais de laboratoire, d'optimiser les réglages et d'étudier les influences des réactifs de floculation sur les processus biologiques développés dans le traitement aval.

Les résultats obtenus sur le pilote concernant le temps de séjour, le volume d'air injecté, le pH, la nature et le taux d'incorporation des réactifs, ainsi que l'élimination de l'ammoniac libre ont été confirmés. Il a même été trouvé des taux d'élimination des MES supérieurs, variant de 87 à 96 %, selon le type de réactif cationique choisi.

L'utilisation intensive de ces agents désémulsifiants, principalement des polyacrylamides, dans le traitement des eaux usées industrielles, implique une connaissance approfondie de leurs propriétés, en particulier de leur toxicité.

L'effet bactéricide et bactériostatique a été étudié avec les bactéries de la station biologique d'une cokerie.

Les résultats obtenus démontrent une bonne biodégradabilité des polyélectrolytes, l'effet bactériostatique (après 24 heures) étant nul.

On a également testé une variante caractérisée par un double passage des eaux ammoniacales dans la cellule de flottation, pouvant constituer une optimisation du traitement, en évitant l'emploi de réactif. Après une première flottation, les eaux épurées sont recirculées et subissent une deuxième passe dans la cellule de flottation. Les chiffres obtenus après le deuxième passage peuvent être regroupés autour d'une extraction globale de l'ordre de 98 %, quelque soit le schéma de traitement.

Le procédé décrit ne se limite pas aux essais indiqués réalisés sur les eaux de cokerie. En effet, ayant prouvé son efficacité sur ce type d'eaux résiduaires particulièrement difficiles à traiter, il peut être aisément transposable à tout type d'eaux usées ammoniacales.

Il va de soi que la présente invention n'a été décrite qu'à titre purement explicatif et nullement limitatif et que toute modification, notamment au niveau des équivalences, pourra y être apportée sans sortir de son cadre.

## Revendications

1. Procédé de prétraitement des eaux ammoniacales chargées en matières en suspension (MES), caractérisé en ce qu'il comprend une étape de flottation assurant à la fois l'élimination de ces MES et l'extraction d'une partie de l'ammoniac libre.

2. Procédé selon la revendication 1, caractérisé en ce que la flottation est assurée par insufflation d'air.

3. Procédé selon la revendication 1, caractérisé en ce que la flottation est assurée par insufflation d'un gaz industriel.

4. Procédé selon la revendication 2 ou 3, caractérisé en ce que la quantité d'air ou de gaz industriel insufflé est comprise entre deux et quatre fois le volume d'eau à traiter.

5. Procédé selon l'une des revendications 1 à 4, caractérisé en ce qu'un réactif désémulsifiant (5.6), en particulier du type cationique fort, est additionné lors de l'étape de flottation.

6. Procédé selon la revendication 5, caractérisé en ce que la concentration de réactif désémulsifiant varie entre 10 et 30 mg/l.

7. Procédé selon l'une des revendications 1 à 6, caractérisé en ce que le pH est compris entre 7 et 9.

8. Procédé selon la revendication 1, 2, 3, 5, 5, ou 7, caractérisé en ce que l'eau traitée sortant de la cellule de flottation est recyclée dans cette cellule.

9. Procédé selon la revendication 1, 2, 3, 4, 5, 7 ou 8, caractérisé en ce que de la vapeur d'eau (VE) est injectée dans la cellule de flottation.

10. Procédé selon la revendication 1, 2, 3, 4, 5, 7 ou 8, caractérisé en ce qu'un gaz industriel est injecté dans la cellule de flottation.

11. Procédé selon la revendication 9 ou 10, caractérisé en ce que le rapport vapeur ou gaz industriel/eau à traiter optimum est compris entre 8 et 12 % .

12. Application du procédé selon l'une quelconque des revendications 1 à 11 aux eaux résiduaires de cokerie.

13. Installation de traitement des eaux ammoniacales mettant en oeuvre une étape de flottation selon l'une quelconque des revendications 1 à 11.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | WASTEWATER TREATMENT PLANT DESIGN, by A Joint Committee of the Water Pollution Control Federation and the American Society of Civil Engineers, 1977, page 151, Lancaster Press, Inc., Lancaster, Pa., US  * Page 151, colonne de droite, lignes 1-12 * | 1 | C 02 F 1/24 C 02 F 1/58 |
| Y | US-A-2 766 203 (J.S. BROWN et al.)  * Colonne 2, lignes 1-19; colonne 4, ligne 50 - colonne 5, ligne 14; colonne 10, lignes 39-48 * | 1-5,10 ,13 | |
| Y | US-A-3 625 882 (L.C. WATERMAN)  * Colonne 1, lignes 37-57; colonne 3, lignes 16-52; colonne 5, lignes 9-19; colonne 6, lignes 33-41; figure 2 * | 1-3,9 10,13 | DOMAINES TECHNIQUES RECHERCHES (Int. Cl.4) |
| A | FR-A-2 300 620 (DEGREMONT)  * Page 9, revendications 1,3 * | 5,6 | C 02 F B 01 D |
| A | DE-A-1 517 713 (SIEBTECHNIK GmbH)  * Page 1, alinéas 1,3; page 2, alinéa 1; page 3, revendications 1,2 * | 1,5 | |

--- -/-

Le présent rapport de recherche a été établi pour toutes les revendications

| Lieu de la recherche | Date d'achèvement de la recherche | Examinateur |
|---|---|---|
| LA HAYE | 05-06-1987 | TEPLY J. |

| | DOCUMENTS CONSIDERES COMME PERTINENTS | | Page   2 |
|---|---|---|---|
| Catégorie | Citation du document avec indication, en cas de besoin, des parties pertinentes | Revendication concernée | CLASSEMENT DE LA DEMANDE (Int. Cl.4) |
| A | US-A-4 176 062  (UNITED STATES STEEL)<br>* Colonne 6, revendication 1 *<br><br>----- | 1 | |
| | | | **DOMAINES TECHNIQUES RECHERCHES (Int. Cl.4)** |
| | Le présent rapport de recherche a été établi pour toutes les revendications | | |

| Lieu de la recherche<br>LA HAYE | Date d'achèvement de la recherche<br>05-06-1987 | Examinateur<br>TEPLY J. |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

 

& : membre de la même famille, document correspondant

OEB Form 1503. 03.82